# EUROPEAN PATENT SPECIFICATION

(11) **EP 1 488 657 B1**
(45) Date of publication and mention of the grant of the patent: **26.01.2011**
(21) Application number: 03713150.5
(22) Date of filing: 21.03.2003
(51) Int. Cl.: H04W 8/20, H04L 29/08, H04W 80/12

(54) **A METHOD FOR EXCHANGING USER-SPECIFIC DATA FROM A MOBILE NETWORK TO A SERVICE APPLICATION OF AN EXTERNAL SERVICE PROVIDER USING A UNIQUE APPLICATION USER ID CODE**
VERFAHREN ZUM AUSTAUSCH BENUTZERSPEZIFISCHER DATEN VON EINEM MOBILNETZWERK ZU EINER DIENSTANWENDUNG EINES EXTERNEN DIENSTANBIETERS UNTER VERWENDUNG EINES EINDEUTIGEN ANWENDUNGSBENUTZER-ID-CODES
PROCEDE D'ECHANGE DE DONNEES SPECIFIQUES A DES UTILISATEURS, D'UN RESEAU MOBILE VERS UNE APPLICATION DE SERVICE D'UN FOURNISSEUR DE SERVICES EXTERNES, AU MOYEN D'UN CODE D'IDENTIFICATION D'UTILISATEUR D'APPLICATION UNIQUE

(30) Priority: 27.03.2002 SE 0200953
(43) Date of publication of application: 22.12.2004
(73) Proprietor: Telefonaktiebolaget LM Ericsson (publ), 164 83 Stockholm (SE)
(72) Inventor: HALLENSLEBEN, Sebastian, Burgess Hill RH15 9SL (GB)
(74) Representative: Norin, Klas
(86) International application number: PCT/SE2003/000466
(87) International publication number: WO 2003/081940

(56) References cited:
- EP-A2- 1 182 587
- WO-A1-01/99463
- WO-A1-02/33913
- WO-A2-02/23925

## Description

### TECHNICAL FIELD

The present invention relates generally to a method and data control server for exchanging potentially sensitive user-specific data from a mobile network to a service application of an external service provider. In particular, the invention is concerned with controlling and facilitating the process of providing such data.

### BACKGROUND OF THE INVENTION AND PRIOR ART

Mobile phones have so far been used mostly for making voice calls and for communicating short text messages, such as SMS (Short Message Service) messages. Further, Internet browsing has rapidly become very popular and in recent years, the wireless domain and the Internet are converging. Mobile terminals are now available, having functionality for connecting to the Internet over a wireless access network to obtain information and services from servers located throughout the world.

Today, work is in progress for developing a multitude of new mobile services, which will be possible to employ in particular as new technology for mobile communication is introduced, providing greater network capacity and higher transmission bitrates. By way of example, GPRS (General Packet Radio Service) and WCDMA (Wideband Code Division Multiple Access) networks are currently emerging for enabling wireless data services requiring a wide range of data rates. The contents of the new services may include text, images, voice, audio files and video files in various different formats and combinations. More sophisticated mobile terminals are also becoming available on the market equipped with functions to match these new services.

In particular, mobile instant messaging and presence services are rapidly becoming popular. Instant messaging is known from the world of fixed desktops, including message status reporting and various group and contact list features. Presence services involve information on the location of mobile terminals, and enable users to receive messages according to their profile and availability. A user profile can be personal and may be defined by preferences, interests and hobbies, as well as more temporary factors, such as user availability and current moods. Messages and content services can also be delivered depending on present location, availability and the capabilities of the user's mobile terminal.

A mobile network providing wireless access to mobile terminals typically comprises a plurality of base stations being connected together by means of switching nodes such as Base Station Controllers (BSC) and/or Mobile Switching Centres (MSC). Each base station provides radio coverage over an area known as a cell, for communication over radio channels with mobile terminals located in the cell. The mobile network further comprises a multitude of components or nodes for handling traffic and various services for terminals, such as, e.g., a user management node, a billing centre, a subscription management node and a mobile positioning service (MPS) node. Such mobile networks are sometimes referred to as "Public Land Mobile Networks" (PLMNs).

In order to provide wireless access and specific services to users of the mobile terminals, the mobile network stores user-specific data defining user profiles and/or subscription parameters, e.g., as exemplified above. Thereby, the mobile network can adapt and customise its services to each user, based on the stored user data. Further, many services and applications are provided from so-called third party service providers outside the mobile network, which will be referred to as "external providers" for short in this description. The external providers may communicate with mobile terminals over a backbone network, such as the Internet, a PSTN (Public Switched Telephony Network) or any type of wireless network, and the mobile network or PLMN to which the intended terminal is currently connected.

External providers may thus activate service applications for providing specific services to mobile terminals, typically upon request from a terminal. A service application may also be triggered without a preceding terminal request, such as through a "push" mechanism as used for example in the context of WAP (Wireless Application Protocol) telephony.

Examples of service applications are mail programs, chat programs, content services providing news, weather information or stock quotes, and entertainment services for jokes, games or the like. Such applications often require access to certain user data stored in the mobile network, for enabling adaptation to specific users. In that case, an external provider requests that such data be retrieved and given from the mobile network. When the external provider has obtained the necessary information on the user, application data can be communicated with the mobile terminal using the mobile network as a transparent "pipeline".

User data stored in a mobile network is available to, and can be freely accessed by, components and nodes within the mobile network, since these are controlled by the mobile network owning the user data. However, difficulties may arise with respect to privacy when an external provider requires access to certain user data in the mobile network in order to provide a service to one or more mobile terminals. It is then highly desirable to ensure that the external provider is authorised to access the requested user data before the data is delivered, and to protect sensitive user information from unauthorised access. It is also desirable to control the exchange of such data in a simple and effective way.

The Parlay 2.1 and 3.0 specifications describe a proposed solution for providing a standardised interface to mobile networks for external service providers. However, the solution does not protect user privacy and is highly complex. It is thus a problem to exchange user data to external service providers in a simple way which protects user privacy.

WO 01/99463 A1 discloses a solution for protecting the integrity of a mobile user when providing positioning information to external service providers. A subscriber connects to a homepage located at the supplier of positioning services and specifies his/her subscriber number on the homepage to obtain a positioning service. A message is then sent to the subscriber which is acknowledged. The acknowledgement is sent to an alias server which creates an alias in an alias server for the positioning of the mobile station. The subscriber is then positioned by the mobile operator via the stored alias. Hence, the service provider first asks the subscriber if it is acceptable that the service determines his/her position, and if so the alias is created in the alias server.

### SUMMARY OF THE INVENTION

The object of the present invention is to reduce or eliminate the problems outlined above. This object and others are obtained by providing a method in a data control server of the mobile network, acting as an interface towards external service providers and their applications, of controlling the exchange of user-specific data from a mobile network to a. service application of an external service provider, wherein certain user data is needed by the service application for providing a requested service to a mobile user. A service request is received by the data control server from the mobile user directed to the service application and a unique Application User Identification (AVID) code is generated and assigned to a combination of the mobile user and the service application. The service request and the assigned AUID code is then sent to the application. A request for the needed user data is received from the service application together with the AUID code. It is then determined whether the service application is allowed to retrieve the requested user data by checking a permission table specifying the types of user data that each service application is allowed to receive from the mobile network. If so, the requested user data is retrieved based on the received AUID code, and is sent to the application. On the other hand, an error message may be sent if it is determined that the application is not allowed to retrieve the requested user data.

The inventive procedure may be implemented in a single data control server having means for performing the procedure. User data can then be efficiently controlled and communicated between a mobile network and service applications. The data control server may include a translation table for storing the AUID code together with a mobile user identity and an application identity. The data control server may further include a translator for translating AUID codes into mobile user identities and vice versa by checking the translation table.

The data control server may further include code generating means being capable of generating new AUID codes by dividing the decimal representation of a non-periodic irrational number into blocks of a certain length, wherein each block may be used as an AUID code.

The inventive procedure may further be executed by means of computer program product comprising software code means adapted to cause a data control server to perform the inventive method.

### BRIEF DESCRIPTION OF THE DRAWINGS

The present invention will now be described in more detail and with reference to the accompanying drawings, in which:
- Fig. 1 is a schematic view of a simplified communication scenario for exchanging user data to an external provider or application.
- Fig. 2 is a logical block diagram of an exemplary data control server.
- Fig's 3 and 4 are signalling diagrams for two exemplary communication procedures.
- Fig. 5 is a flow chart illustrating the steps executed in a method for exchanging user data according to one aspect of the invention.

### DESCRIPTION OF PREFERRED EMBODIMENTS

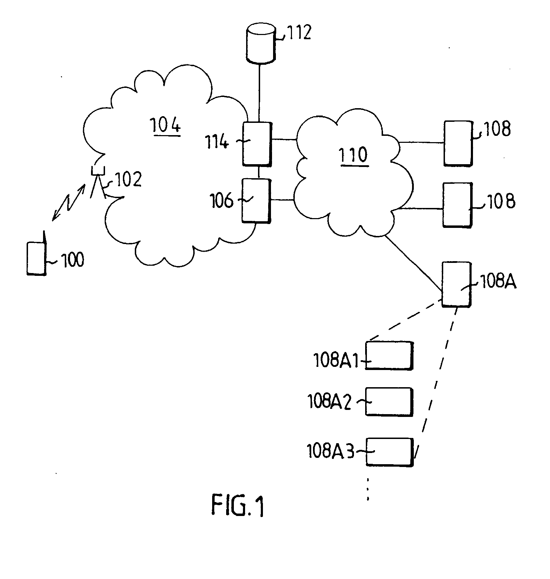

A simplified communication scenario is illustrated in Fig. 1, where user data can be exchanged according to the present invention to a service application of an external provider. A mobile terminal 100 operated by a mobile user is connected to a base station 102 of a mobile network 104 by means of a radio air interface. The mobile network 104 uses standardised communication protocols, such as any of those defined for GSM, TDMA, GPRS, UMTS, etc, for transmission of speech and data over the air interface as well as within the network. TCP/IP is also commonly used within mobile networks.

A gateway 106 in the mobile network 104, provides connection for mobile terminals to external providers 108 being connected to a backbone network 110, such as the Internet. The gateway 106 may act as a service portal to mobile terminals for connection to specific external providers. Furthermore, each external provider 108 comprises one or more service applications for executing specific services. In Fig. 1, three service applications 108A1-3 are shown as logical entities at the external provider 108A.

Various mobile services are available from external providers 108 by connecting to servers of the external providers, where the services reside typically as computer programs and data files. An external provider may have one or more physical server entities or a server system for executing any number of service applications. A physical server entity may also be shared by plural external providers. Services may also be provided by multiple external providers. In the following description, the term "external provider" represents any combination of physical server entities providing a single access point in the perspective of mobile terminals.

The mobile network 104 further comprises a user data base 112 in which user-specific data is stored for mobile users being registered in the mobile network 104. For example, the stored user data may be related to more or less static factors such as capabilities of the user's mobile terminal and predefined QoS (Quality of Service) parameters, e.g., depending on a subscription, as well as preferences and interests as specified by the user. User data may also be stored concerning more dynamic factors, such as current user availability and moods and the present location of the terminal. Furthermore, the user data base 112 may also hold certain user data which is stored temporarily for visiting users not belonging to the mobile network 104.

When an external provider shall provide a specific service to a mobile user, an application of the service may require specific user data in order to be executed. The user data is therefore requested from the user data base 112 by the application. However, requested user data may contain information on the user which is private and/or secret and should not be exchanged to anyone requesting the information without control. It is thus desirable to protect the privacy or anonymity of users. The present invention provides a simple and reliable solution for obtaining such control of data exchange.

For this purpose, the mobile network 104 comprises a data control server 114 acting as an interface towards the external providers 108 and their applications, for handling requests for specific user data in the mobile network 104. The data control server 114 controls the exchange of user data and is preferably the only point of contact for making such requests by the external providers 108.

An exemplary procedure for exchanging user data will now be described with reference to Fig. 1. When a user of the mobile terminal 100 wants to make use of one or more mobile services, a suitable command is entered into the mobile terminal 100 by the user. In response to the entered command, the mobile terminal 100 sends a service request to the gateway 106, which acts as a portal for obtaining the service. The gateway 106 then forwards the service request to the data control server 114 which recognises in this case that the user has not accessed this particular service before.

The data control server 114 then generates a unique Application User Identification (AUID) code representing the combination of a specific user and a specific service application corresponding to the requested service. The AUID code is stored together with a mobile user identity such as an MSISDN (Mobile Subscriber ISDN number) used in GSM networks, and an application identity such as a name. In practice, an identity code of either a user subscription or a physical terminal may be used as the mobile user identity.

Thus, a list of AUID codes for different service applications may be stored in the mobile network 104 for each user. Next, the data control server 114 sends the service request and the generated AUID code over the backbone network 110 to a service application 108A1 corresponding to the requested service.

After receiving the service request, the service application 108A1 may recognise that certain user-specific data is needed for providing the requested service. For example, such user data may be needed for adapting the service according to user preferences and/or terminal capabilities. In that case, the service application 108A1 sends a request for the needed user data to the data control server 114 of the mobile network 104. The received AUID code is also included in the data request.

The data control server 114 then determines whether this particular application 108A1 is authorised to receive the requested user data, which will be described in more detail later, and may retrieve the data from the user data base 112 and send it to the application accordingly. Alternatively, the service application 108A1 may not need any user data from the user data base 112 for the first service request from the mobile user. The service can then be executed without requesting user data from the mobile network 104.

The AUID code has now been stored in the mobile network 104 and is also known to the corresponding service application 108A1 as being stored locally by the application 108A1 together with any available user data. Hence, the AUID code can be used hereafter upon any subsequent access of the user to the same service. In other words, the data control server 114 may pass the AUID code with a new service request from the user on a later occasion to the service application 108A1, which then can attribute the previously received user data to the service, if it was locally stored.

The service application 108A1 can also send a request to the data control server 114 for further user data including the AUID code, such as "where is the user currently located having AUID xxx?". The data control server 114 can then obtain the corresponding mobile user identity from the stored AUID code list for retrieving the requested information from the user database 112. The server 114 may then decide whether to grant this request or not, depending on whether the application is authorised to receive the requested type of data, and further depending on, e.g., stored user preferences.

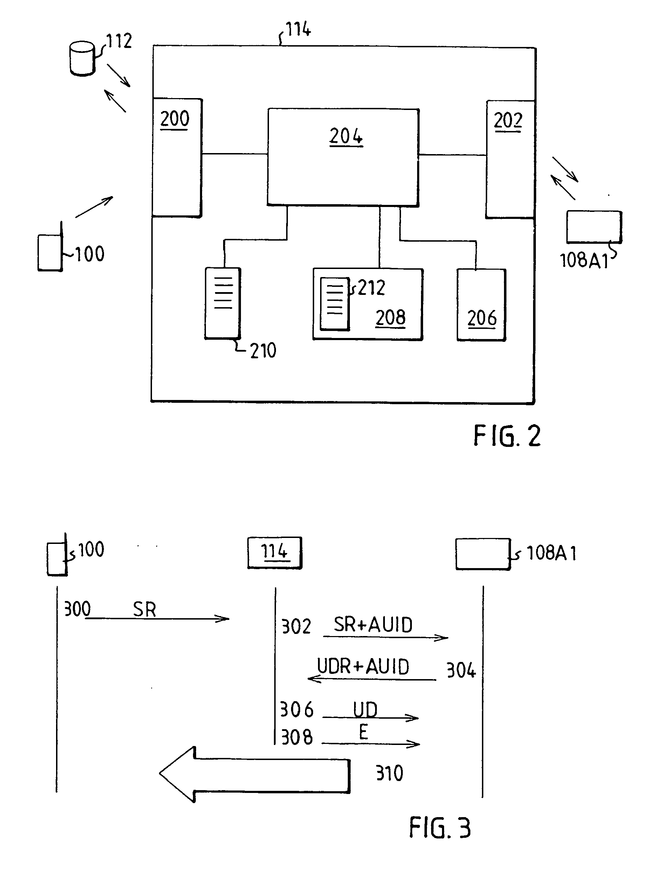

Fig. 2 is a logical block diagram of an embodiment of the data control server 114 shown in Fig. 1. The data control server 114 comprises a mobile network interface 200 for communication with the mobile network 104, and an external provider interface 202 for communication with service applications in external providers 108, such as the service application 108A1. A central logic unit 204 is connected to the interfaces 200, 202 for executing the process described below. The logic unit 204 is further connected to an AUID code generator 206, a translator 208 and a permission table 210. The translator 208 includes a translation table 212.

The mobile network interface 200 is configured to receive service requests from mobile users and may retrieve user data from the user data base 112, e.g. using a communication protocol normally used in the mobile network 104. The external provider interface 202 is configured to receive requests for user data from service applications and may respond with either the requested data or an appropriate error message.

The AUID code generator 206 is configured to generate new unique AUID codes using one or more suitable algorithms, ensuring that a new code has not been used before. It is also important that the generated codes cannot be derived and reproduced by any unauthorised party. A code should therefore be sufficiently long and not have any regular pattern. For example, algorithms may be used which are previously known in pseudo-random number generators offered in most programming languages, such as Java and C++. It is then common programming practice to use current time as seed for the generator to avoid any regularity.

It is also possible to generate new AUID codes by using a non-obvious irrational number, such as the square root of 57,20938763 or the like, for which the decimal representation is non-periodic. The decimal representation can be divided into blocks of a certain length, such as 50 digits. Each block is then most likely unique and may be used as an AUID code.

The translator 208 containing the translation table 212 is configured to translate AUID codes into mobile user identities and vice versa. The table 212 comprises a list of AUID codes for different user/application combinations, where the users are preferably specified by corresponding identities as being valid in the mobile network 104. An exemplary translation table 212 is shown below:

| **AUID** | **Mobile user ID** | **Application** |
|---|---|---|
| xxx | +46 111 222 | A1 |
| yyy | +46 111 222 | A2 |
| zzz | +46 333 444 | A1 |
| vvv | +46 333 444 | A2 |

It should be noted that each user may have several AUID codes, one for each application it has accessed.

The permission table 210 specifies the types of user data that each service application is allowed to receive from the mobile network. This table is checked before granting a user data request from an application. An exemplary permission table 210 is shown below:

| **Application** | **Allowed user data** |
|---|---|
| A1 | Current location. |
| A2 | Current location, prepaid account status. |
| A3 | Prepaid account status. |
| A4 | Current location, current mood. |

A permission table 210 may be maintained for a specific user or group of users, or may be valid for all subscribers belonging to the mobile network 104. The table content may further have been negotiated with the external provider controlling each application. There may also be a minimum set of permissions that is automatically allowed to all service applications, such as for mobile terminal capabilities and subscription-based QoS parameters.

Fig's 3 and 4 illustrate signalling diagrams for exemplary communication procedures using the present invention. These will now be described with further reference to Fig. 2. It should be noted that some or all messages to and from the data control server 114 may in practice be transmitted over a service portal or the like of the mobile network 104, such as the gateway 106 in Fig. 1.

In Fig. 3, a mobile terminal 100 accesses a service application 108A1 for the first time. In a first step 300, the terminal 100 sends a service request SR to the mobile network which is forwarded to the data control server 114 and received in the mobile network interface 200 residing therein. The logic unit 204 identifies the mobile user and the application 108A1 corresponding to the received service request. It is then recognised by the translator 208 that no AUID exists for this particular user/application combination, by checking the translation table 212. The AUID code generator 206 is then ordered to generate a new AUID code, which is assigned to this user/application combination and stored in the translation table 212.

Next in a step 302, the service request is sent with the AUID code to the application 108A1. The application 108A1 then determines in this case that specific user data is needed to provide the requested service, and therefore sends a user data request UDR and the AUID code to the data control server 114 in a step 304, which are received in the external provider interface 202 of the server 114. It is then checked in the permission table 210 whether the application 108A1 is allowed to receive the requested user data. If so, the requested user data is retrieved from the user database 112 and the user data UD is sent to the application 108A1 in a step 306. If the application 108A1 is not allowed to receive the requested user data, or if the application 108A1 is not registered at all, an appropriate error message E may be sent in an alternative step 308, or no response is sent at all. Finally, if the application 108A1 has received the user data, it can execute the requested service as indicated in a step 310, e.g. by sending payload data to the mobile terminal 100.

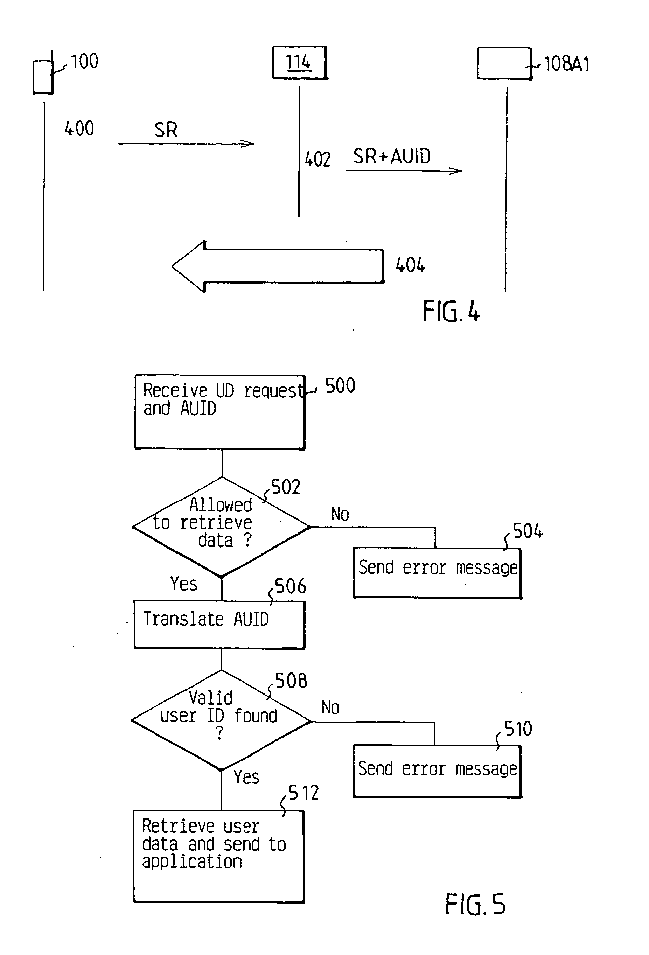

In Fig. 4, a mobile terminal 100 accesses the service application 108A1 again at a later occasion by sending a new service request SR in a first step 400, which is received in the data control server 114. The logic unit 204 then identifies the mobile user and the application 108A1 as in the example above, and the previously assigned AUID code is retrieved from the translation table 212 by the translator 208. In a next step 402, the service request SR and the AUID code are sent to the application 108A1. It is then possible for the application 108A1 to attribute the previously received user data to the service, if it has been locally stored. If no further user data is needed, the application 108A1 can execute the requested service as indicated in a step 404. If more data is needed, such as a current location or a prepaid account status, the steps 304-310 in Fig. 3 may be executed again, as described above.

The processes of retrieving needed user data and delivering a requested service are thereby simplified and can be controlled by the mobile network for ensuring user privacy.

Fig. 5 is a flow chart illustrating the procedure executed in the data control server 114 when a user data request is received from a service application of an external provider. The user data request is received together with an AUID code in a first step 500, corresponding to step 304 in Fig. 3. An authentication routine may optionally be performed in connection with step 500. Next in a step 502, it is determined whether the application is allowed to retrieve the requested user data, by checking the permission table 210. If not, an error message is sent to the application in a step 504, or alternatively, no response is given at all. If the request is granted, the received AUID code is translated into a mobile user identity in a step 506, by checking the translation table 212.

Next, it is determined in a step 508 whether a valid mobile user identity was found in step 506 in order to check if the application is authorised. This check provides additional security since only an authorised application can know a valid AUID code. If not found, an error message is sent to the application in a step 510. Otherwise, the requested user data is retrieved from the user database 112 and is sent to the application in a final step 512.

By using the described invention, a simple and reliable procedure is obtained for exchanging user data to service applications of external providers, enabling efficient control and communication between a mobile network and the applications. Access to user data is controlled by a single component, the data control server 114, which thus may act as a firewall. Hence, sensitive user information can be protected from unauthorised access.

By using the unique AUID codes in service requests according to the present invention, an unauthorised application cannot impersonate an authorised application to fraudulently obtain user data. Also, users are automatically authenticated towards the applications by the AUID codes and no exchange of usernames and passwords is necessary between users and applications. Therefore, applications designed to be accessed over the Internet can easily be adapted for access via a data control server 114 as described above.

While service applications are forced to direct user data requests to a data control server 114 for initial control, the mobile network can still be used as a "pipeline" for communicating application data when delivering the service, without further involving the data control server 114.

In practice, the invention is preferably implemented as software code means in a computer program product adapted to cause a data control server 114 to perform the inventive method, such as the above-described processes. It should be noted that the functional units 200-212 in Fig. 2 are merely logically represented and may be implemented as software in one or more processors or the like anywhere in the server 114. In an alternative embodiment, the logic unit 204 may for example be integrated with the interfaces 200, 202. In another embodiment, the logic unit 204, the AUID code generator 206 and the translator 208 may be integrated into a single functional unit. Furthermore, the permission table 210 and the translation table 212 may be stored in a memory within or outside the data control server 114.

While the invention has been described with reference to specific exemplary embodiments, the description is only intended to illustrate the inventive concept and should not be taken as limiting the scope of the invention. Various alternatives, modifications and equivalents may be used without departing from the scope of the invention, which is defined by the appended claims.

## Claims

1. A method of controlling the exchange of user-specific data from a mobile network (104) to a service application (108A1) of an external service provider (108A), wherein certain user data is needed by the service application (108A1) for providing a requested service to a mobile user (100), **characterised by** the following steps performed by a data control server (114) of the mobile network (104), acting as an interface towards external service providers (108A) and their applications:
- A) receiving (300) a service request from the mobile user (100) directed to the service application (108A1),
- B) generating a unique Application User Identification AUID code which is assigned to a combination of the mobile user (100) and the service application (108A1),
- C) sending (302) the service request and the assigned AUID code to the service application (108A1),
- D) receiving (304) from the service application (108A1) a request for the needed user data, the data request including said AUID code,
- E) determining whether the service application (108A1) is allowed to retrieve the requested user data by checking a permission table (210) specifying the types of user data that each service application (108A1) is allowed to receive from the mobile network (104), and
- F) retrieving the requested user data based on the received AUID code and sending (306) the user data to the service application (108A1) if the service application (108A1) is allowed to receive the requested user data according to the permission table (210).

2. A method according to claim 1, **characterised in that** the AUID code is stored in a translation table (212) together with a mobile user identity and an application identity.

3. A method according to claim 2, **characterised in that** the mobile user identity is obtained from the translation table (212) based on the AUID code received in step D), for retrieving the requested user data in step F) from a user data base (112) in which user-specific data is stored for mobile users (100) being registered in the mobile network (104).

4. A method according to any of claims 1 - 3, **characterised in that** the AUID code is used by the service application (108A1) for attributing the user data sent in step F), to the service upon subsequent access of the mobile user (100) to the same service.

5. A method according to any of claims 1 - 4, **characterised in that** a permission table (210) is maintained for a specific user or group of users.

6. A method according to any of claims 1 - 5, **characterised in that** an error message is sent if it is determined in step E) that the service application (108A1) is not allowed to retrieve the requested user data.

7. A method according to any of claims 1 - 6, **characterised in that** new AUID codes are generated by dividing the decimal representation of a non-periodic irrational number into blocks of a certain length, wherein each block is used as an AUID code.

8. A method according to any of claims 1 - 7, **characterised by** the step of determining whether a valid mobile user identity exists that corresponds to the AUID code received in step D) in order to check if the service application (108A1). is authorised.

9. A data control server (114) of a mobile network (104), for controlling the exchange of user-specific data from the mobile network (104) to a service application (108A1) of an external service provider (108A), wherein certain user data is needed by the service application (108A1) for providing a requested service to a mobile user (100), the data control server (114) acting as an interface towards external service providers (108A) and their applications, **characterised by:**
- means (200) for receiving a service request from the mobile user (100) directed to the service application (108A1),
- means (206) for generating a unique Application User Identification AUID code which is assigned to a combination of the mobile user (100) and the service application (108A1),
- means (202) for sending the service request and the assigned AUID code to the service application (108A1),
- means for receiving from the service application (108A1) a request for the needed user data, the data request including said AUID code,
- means (204) for determining whether the service application (108A1) is allowed to retrieve the requested user data by checking a permission table (210) specifying the types of user data that each service application (108A1) is allowed to receive from the mobile network (104),
- means (200,208,212) for retrieving the requested user data based on the received AUID code, and
- means (202) for sending the user data to the service application (108A1) if the service application (108A1) is allowed to receive the requested user data according to the permission table (210).

10. A data control server (114) according to claim 9, **characterised by** a translation table (212) for storing the AUID code together with a mobile user identity and an application identity.

11. A data control server (114) according to claim 10, **characterised by** a translator (208) for translating AUID codes into mobile user identities and vice versa by checking the translation table (212).

12. A data control server (114) according to any of claims 9 - 11, **characterised in that** the code generating means (206) is capable of generating new AUID codes by dividing the decimal representation of a non-periodic irrational number into blocks of a certain length, wherein each block is used as an AUID code.

13. A data control server (114) according to any of claims 9 - 12, **characterised by** a mobile network interface (200) for receiving service requests from mobile users (100), and for retrieving user data.

14. A data control server (114) according to any of claims 9 - 13, **characterised by** an external provider interface (202) for receiving requests for user data from service applications (108A1), and for responding with either the requested data or an appropriate error message.

15. A computer program product comprising software code means adapted to cause a data control server (114) to perform the method of any of claims 1 - 8.

## Patentansprüche

1. Verfahren zum Steuern des Austauschs von benutzerspezifischen Daten von einem Mobilnetz (104) zu einer Dienstanwendung (108A1) eines externen Dienstanbieters (108A), worin bestimmte Benutzerdaten von der Dienstanwendung (108A1) benötigt werden, um einem Mobilbenutzer (100) einen angeforderten Dienst bereitzustellen, **gekennzeichnet durch** die folgenden Schritte, die von einem Datensteuerungsserver (114) des Mobilnetzes (104) ausgeführt werden, der als eine Schnittstelle zu externen Dienstanbietern (108A) und ihren Anwendungen funktioniert:
- A) Empfangen (300) einer Dienstanforderung vom Mobilbenutzer (100), die zu einer Dienstanwendung (108A1) geleitet wird,
- B) Generieren eines eindeutigen AUID(Anwendungsbenutzeridentifikation)-Codes, der einer Kombination des Mobilbenutzers (100) und der Dienstanwendung (108A1) zugewiesen wird,
- C) Senden (302) der Dienstanforderung und des zugewiesenen AUID-Codes an die Dienstanwendung (108A1),
- D) Empfangen (304) einer Anforderung für die benötigten Benutzerdaten von der Dienstanwendung (108A1), wobei die Datenanforderung den AUID-Code enthält,
- E) Bestimmen, ob der Dienstanwendung (108A1) erlaubt ist, die angeforderten Benutzerdaten abzurufen, indem eine Erlaubnistabelle (210) gecheckt wird, die die Benutzerdatentypen spezifiziert, die jeder Dienstanwendung (108A1) erlaubt ist, vom Mobilnetz (104) zu empfangen, und
- F) Abrufen der angeforderten Benutzerdaten auf der Basis des empfangenen AUID-Codes und Senden (306) der Benutzerdaten an die Dienstanwendung (108A1), falls der Dienstanwendung (108A1) gemäß der Erlaubnistabelle (210) erlaubt ist, die angeforderten Benutzerdaten zu empfangen.

2. Verfahren nach Anspruch 1, **dadurch gekennzeichnet, dass** der AUID-Code samt einer Mobilbenutzeridentität und einer Anwendungsidentität in einer Übersetzungstabelle (212) gespeichert wird.

3. Verfahren nach Anspruch 2, **dadurch gekennzeichnet, dass** die Mobilbenutzeridentität aus der Übersetzungstabelle (212) auf der Basis des in Schritt D) empfangenen AUID-Codes erhalten wird, um die angeforderten Benutzerdaten in Schritt F) aus einer Benutzerdatenbank (112) abzurufen, in der benutzerspezifische Daten für Mobilbenutzer (100) gespeichert sind, die im Mobilnetz (104) registriert sind.

4. Verfahren nach einem der Ansprüche 1 - 3, **dadurch gekennzeichnet, dass** der AUID-Code von der Dienstanwendung (108A1) benutzt wird, um die in Schritt F) gesendeten Benutzerdaten dem Dienst zuzuschreiben nach nachfolgendem Zugriff des Mobilbenutzers (100) auf denselben Dienst.

5. Verfahren nach einem der Ansprüche 1 - 4, **dadurch gekennzeichnet, dass** eine Erlaubnistabelle (210) für einen spezifischen Benutzer oder eine Gruppe von Benutzern gepflegt wird.

6. Verfahren nach einem der Ansprüche 1 - 5, **dadurch gekennzeichnet, dass** eine Fehlernachricht gesendet wird, falls in Schritt E) bestimmt wird, dass der Dienstanwendung (108A1) nicht erlaubt ist, die angeforderten Benutzerdaten abzurufen.

7. Verfahren nach einem der Ansprüche 1 - 6, **dadurch gekennzeichnet, dass** neue AUID-Codes **dadurch** generiert werden, dass die Dezimalrepräsentation einer nichtperiodischen irrationalen Zahl in Blöcke einer bestimmten Länge unterteilt wird, worin jeder Block als ein AUID-Code benutzt wird.

8. Verfahren nach einem der Ansprüche 1 - 7, **gekennzeichnet durch** den Schritt des Bestimmens, ob es eine gültige Mobilbenutzeridentität gibt, die dem in Schritt D) empfangenen AUID-Code entspricht, um zu checken, ob die Dienstanwendung (108A1) berechtigt ist.

9. Datensteuerungsserver (114) eines Mobilnetzes (104) zum Steuern des Austauschs von benutzerspezifischen Daten vom Mobilnetz (104) zu einer Dienstanwendung (108A1) eines externen Dienstanbieters (108A), worin bestimmte Benutzerdaten von der Dienstanwendung (108A1) benötigt werden, um einem Mobilbenutzer (100) einen angeforderten Dienst bereitzustellen, wobei der Datensteuerungsserver (114) als eine Schnittstelle zu externen Dienstanbietern (108A) und ihren Anwendungen funktioniert, **gekennzeichnet durch**:
- ein Mittel (200) zum Empfangen einer Dienstanforderung vom Mobilbenutzer (100), die zur Dienstanwendung (108A1) geleitet wird,
- ein Mittel (206) zum Generieren eines eindeutigen AUID(Anwendungsbenutzeridentifikation)-Codes, der einer Kombination des Mobilbenutzers (100) und der Dienstanwendung (108A1) zugewiesen wird,
- ein Mittel (202) zum Senden der Dienstanforderung und des zugewiesenen AUID-Codes an die Dienstanwendung (108A1),
- ein Mittel zum Empfangen einer Anforderung für die benötigten Benutzerdaten von der Dienstanwendung (108A1), wobei die Datenanforderung den AUID-Code enthält,
- ein Mittel (204) zum Bestimmen, ob der Dienstanwendung (108A1) erlaubt ist, die angeforderten Benutzerdaten abzurufen, indem eine Erlaubnistabelle (210) gecheckt wird, die die Benutzerdatentypen spezifiziert, die jeder Dienstanwendung (108A1) erlaubt ist, vom Mobilnetz (104) zu empfangen,
- ein Mittel (200,208,212) zum Abrufen der angeforderten Benutzerdaten auf der Basis des empfangenen AUID-Codes, und
- ein Mittel (202) zum Senden der Benutzerdaten an die Dienstanwendung (108A1), falls der Dienstanwendung (108A1) gemäß der Erlaubnistabelle (210) erlaubt ist, die angeforderten Benutzerdaten zu empfangen.

10. Datensteuerungsserver (114) nach Anspruch 9, **gekennzeichnet durch** eine Übersetzungstabelle (212) zum Speichern des AUID-Codes samt einer Mobilbenutzeridentität und einer Anwendungsidentität.

11. Datensteuerungsserver (114) nach Anspruch 10, **gekennzeichnet durch** einen Übersetzer (208) zum Übersetzen von AUID-Codes in Mobilbenutzeridentitäten und umgekehrt **durch** Checken der Übersetzungstabelle (212).

12. Datensteuerungsserver (114) nach einem der Ansprüche 9 - 11, **dadurch gekennzeichnet, dass** das Codegenerationsmittel (206) befähigt ist, neue AUID-Codes zu generieren, indem es die Dezimalrepräsentation einer nichtperiodischen irrationalen Zahl in Blöcke einer bestimmten Länge unterteilt, worin jeder Block als ein AUID-Code benutzt wird.

13. Datensteuerungsserver (114) nach einem der Ansprüche 9 - 12, **gekennzeichnet durch** eine Mobilnetz-Schnittstelle (200) zum Empfangen von Dienstanforderungen von Mobilbenutzern (100) und zum Abrufen von Benutzerdaten.

14. Datensteuerungsserver (114) nach einem der Ansprüche 9 - 13, **gekennzeichnet durch** eine Schnittstelle (202) für externe Anbieter zum Empfangen von Anforderungen für Benutzerdaten von Dienstanwendungen (108A1) und zum Beantworten mit entweder den angeforderten Daten oder einer geeigneten Fehlernachricht.

15. Computerprogrammprodukt, ein Softwarecodemittel umfassend, das angepasst ist, um zu bewirken, dass ein Datensteuerungsserver (114) das Verfahren nach einem der Ansprüche 1 - 8 ausführt.

## Revendications

1. Procédé destiné à commander l'échange de données spécifiques à des utilisateurs, d'un réseau mobile (104) à une application de service (108A1) d'un fournisseur de services externe (108A), dans lequel certaines données utilisateur sont requises par l'application de service (108A1) pour fournir un service demandé à un utilisateur mobile (100), **caractérisé en ce qu'**il comporte les étapes ci-dessous, mises en oeuvre par un serveur de commande de données (114) du réseau mobile (104) faisant fonction d'interface vers les fournisseurs de services externes (108A) et leurs applications, consistant à :
- A) recevoir (300) une demande de service en provenance de l'utilisateur mobile (100) destinée à l'application de service (108A1) ;
- B) générer un code d'identification d'utilisateur d'application unique, AUID, lequel est attribué à une combinaison de l'utilisateur mobile (100) et de l'application de service (108A1) ;
- C) envoyer (302) la demande de service et le code d'identification AUID attribué à l'application de service (108A1) ;
- D) recevoir (304), en provenance de l'application de service (108A1), une demande concernant les données utilisateur requises, la demande de données incluant ledit code d'identification AUID ;
- E) déterminer si l'application de service (108A1) est autorisée à récupérer les données utilisateur demandées en consultant une table de permissions (210) spécifiant les types de données utilisateur que chaque application de service (108A1) est autorisée à recevoir du réseau mobile (104) ; et
- F) récupérer les données utilisateur demandées sur la base du code d'identification AUID reçu et envoyer (306) les données utilisateur à l'application de service (108A1) lorsque l'application de service (108A1) est autorisée à recevoir les données utilisateur demandées selon la table de permissions (210).

2. Procédé selon la revendication 1, **caractérisé en ce que** le code d'identification AUID est stocké dans une table de traduction (212) avec une identité d'utilisateur mobile et une identité d'application.

3. Procédé selon la revendication 2, **caractérisé en ce que** l'identité d'utilisateur mobile est obtenue à partir de la table de traduction (212) sur la base du code d'identification AUID reçu à l'étape D), pour récupérer les données utilisateur demandées à l'étape F) à partir d'une base de données utilisateur (112) dans laquelle les données spécifiques à des utilisateurs sont stockées pour les utilisateurs mobiles (100) enregistrés dans le réseau mobile (104).

4. Procédé selon l'une quelconque des revendications 1 à 3, **caractérisé en ce que** le code d'identification AUID est utilisé par l'application de service (108A1) pour attribuer les données utilisateur envoyées à l'étape F) au service suite à l'accès subséquent de l'utilisateur mobile (100) au même service.

5. Procédé selon l'une quelconque des revendications 1 à 4, **caractérisé en ce qu'**une table de permissions (210) est maintenue pour un utilisateur spécifique ou pour un groupe d'utilisateurs spécifique.

6. Procédé selon l'une quelconque des revendications 1 à 5, **caractérisé en ce qu'**un message d'erreur est envoyé s'il est déterminé à l'étape E) que l'application de service (108A1) n'est pas autorisée à récupérer les données utilisateur demandées.

7. Procédé selon l'une quelconque des revendications 1 à 6, **caractérisé en ce que** des nouveaux codes d'identification AUID sont générés en divisant la représentation décimale d'un nombre irrationnel non périodique en des blocs d'une certaine longueur, dans lequel chaque bloc est utilisé en tant qu'un code d'identification AUID.

8. Procédé selon l'une quelconque des revendications 1 à 7, **caractérisé en ce qu'**il comporte l'étape consistant à déterminer s'il existe une identité d'utilisateur mobile valide correspondant au code d'identification AUID reçu à l'étape D), en vue de vérifier si l'application de service (108A1) est autorisée.

9. Serveur de commande de données (114) d'un réseau mobile (104), destiné à commander l'échange de données spécifiques à des utilisateurs, du réseau mobile (104) à une application de service (108A1) d'un fournisseur de services externe (108A), dans lequel certaines données utilisateur sont requises par l'application de service (108A1) pour fournir un service demandé à un utilisateur mobile (100), le serveur de commande de données (114) faisant office d'interface vers les fournisseurs de services externes (108A) et leurs applications, **caractérisé par** :
- un moyen (200) pour recevoir une demande de service en provenance de l'utilisateur mobile (100) destinée à l'application de service (108A1) ;
- un moyen (206) pour générer un code d'identification d'utilisateur d'application unique, AUID, lequel est attribué à une combinaison de l'utilisateur mobile (100) et de l'application de service (108A1) ;
- un moyen (202) pour envoyer la demande de service et le code d'identification AUID attribué à l'application de service (108A1);
- un moyen pour recevoir, en provenance de l'application de service (108A1), une demande concernant les données utilisateur requises, la demande de données incluant ledit code d'identification AUID ;
- un moyen (204) pour déterminer si l'application de service (108A1) est autorisée à récupérer les données utilisateur demandées en consultant une table de permissions (210) spécifiant les types de données utilisateur que chaque application de service (108A1) est autorisée à recevoir du réseau mobile (104) ;
- un moyen (220, 208, 212) pour récupérer les données utilisateur demandées sur la base du code d'identification AUID reçu ; et
- un moyen (202) pour envoyer les données utilisateur à l'application de service (108A1) lorsque l'application de service (108A1) est autorisée à recevoir les données utilisateur demandées selon la table de permissions (210).

10. Serveur de commande de données (114) selon la revendication 9, **caractérisé par** une table de traduction (212) pour stocker le code d'identification AUID avec une identité d'utilisateur mobile et une identité d'application.

11. Serveur de commande de données (114) selon la revendication 10, **caractérisé par** un traducteur (208) pour traduire les codes d'identification AUID en des identités d'utilisateur mobile et inversement, en consultant la table de traduction (212).

12. Serveur de commande de données (114) selon l'une quelconque des revendications 9 à 11, **caractérisé en ce que** le moyen de génération de code (206) est apte à générer de nouveaux codes d'identification AUID en divisant la représentation décimale d'un nombre irrationnel non périodique en des blocs d'une certaine longueur, dans lequel chaque bloc est utilisé en tant que code d'identification AUID.

13. Serveur de commande de données (114) selon l'une quelconque des revendications 9 à 12, **caractérisé par** une interface réseau mobile (200) pour recevoir des demandes de service en provenance d'utilisateurs mobiles (100), et pour récupérer les données utilisateur.

14. Serveur de commande de données (114) selon l'une quelconque des revendications 9 à 13, **caractérisé par** une interface de fournisseurs externes (202) pour recevoir les demandes concernant des données utilisateur en provenance d'applications de service (108A1), et pour envoyer en réponse les données demandées ou un message d'erreur pertinent.

15. Produit programme informatique comportant un moyen de code logiciel apte à amener un serveur de commande de données (114) à mettre en oeuvre le procédé selon l'une quelconque des revendications 1 à 8.
